# EUROPEAN PATENT APPLICATION

(11) **EP 1 892 465 A1**
(43) Date of publication of application: **27.02.2008**
(21) Application number: 07016259.9
(22) Date of filing: 20.08.2007
(51) Int. Cl.: F21V 8/00

(54) **Backlight assembley and display apparatus having the same**

(30) Priority: 21.08.2006 KR 20060078669
(71) Applicant: Samsung Electronics Co., Ltd., Yeongtong-gu Suwon-city, Gyeonggi-do 442-742 (KR)
(72) Inventor: Kim, Heu-gon, Gyeonggi-do (KR); Hwang, In-Sun, Gyeonggi-do (KR); Kim, Hyoung-Joo, Gyeonggi-do (KR); Shin, Taek-Sun, Chungcheongnam-do (KR); Yoon, Gyung-seo, Incheon (KR)
(74) Representative: Dr. Weitzel & Partner

(57) **Abstract**

In a backlight assembly and a display apparatus having the backlight assembly, the liquid crystal display apparatus includes a liquid crystal display panel and a backlight assembly. The backlight assembly includes a light guide plate and a prism sheet. The light guide plate provides light to the liquid crystal display panel and includes a prism pattern opposite the liquid crystal display panel.

## Description

### CROSS REFERENCE TO RELATED APPLICATIONS

The present application claims priority from and the benefit of Korean Patent Application No. 10-2006-0078669, filed on August 21, 2006, which is hereby incorporated by reference for all purposes as if fully set forth herein.

### BACKGROUND OF THE INVENTION

### FIELD OF THE INVENTION

The present invention relates to a backlight assembly and a display apparatus including the backlight assembly. More particularly, the present invention relates to a backlight assembly including a light guide plate having a prism pattern and a sheet having a prism pattern, and a display apparatus including the backlight assembly.

### DISCUSSION OF THE BACKGROUND

A liquid crystal display (LCD) apparatus, as a flat panel display apparatus, may be lightweight and slim, allowing for the LCD apparatus to be used in various fields including mobile phones, monitors, television receiver sets, etc.

The LCD apparatus is a passive apparatus that displays an image by adjusting the amount of light generated from an LCD panel. Thus, a backlight assembly to supply light to the LCD panel may be required.

A conventional backlight assembly includes a light source, a light guide plate to diffuse light emitted from the light source, and optical sheets to diffuse or condense light diffused by the light guide plate.

Light may be transferred from the light source through the light guide plate to the LCD panel using direct-illumination or edge-illumination. In direct-illumination, the light source is disposed under the light guide plate and emits light toward the light guide plate, and the light guide plate diffuses the light generated from the light source toward the LCD panel. In edge-illumination, the light source is disposed at sides of the light guide plate, and the light generated from the light source is diffused through the light guide plate toward the LCD panel.

The LCD apparatus employing edge-illumination is thinner than the LCD apparatus employing direct-illumination and is suitable for a portable display apparatus such as a notebook. However, with edge-illumination, light is generated from the backlight assembly only at side parts, so the number of light sources required is fewer than that with direct-illumination. Moreover, with edge-illumination, light is guided toward the LCD panel, so the proceeding direction of the light is greatly changed. For these reasons, the backlight assembly employing edge-illumination may have technical difficulties in realizing high-brightness and improving reliability.

### SUMMARY OF THE INVENTION

The present invention provides an edge type backlight assembly that may have high-brightness and high-reliability, as well as a liquid crystal display apparatus including the backlight assembly.

Additional features of the invention will be set forth in the description which follows, and in part will be apparent from the description, or may be learned by practice of the invention.

The present invention discloses a backlight assembly including a light source, a light guide plate, a first prism sheet, and a second prism sheet. The light guide plate includes a light exiting portion having a light guide prism pattern. The light guide prism pattern includes a plurality of prisms aligned having a triangular cross-section and aligned substantially parallel to each other. The light source is disposed adjacent to a light-entering side surface of the light guide plate and a longitudinal direction of the light guide prism pattern is substantially perpendicular to the light-entering side surface of the light guide plate. The first prism sheet is disposed on the light exiting portion and has a first prism pattern. A longitudinal direction of the first prism pattern is substantially perpendicular to the longitudinal direction of the light guide prism pattern of the light guide plate. The second prism sheet is disposed on the first prism sheet and has a second prism pattern. A longitudinal direction of the second prism pattern is substantially perpendicular to the longitudinal direction of the light guide prism pattern.

The present invention also discloses a liquid crystal display apparatus including a liquid crystal display panel and a backlight assembly. The liquid crystal display panel displays an image using light and the backlight assembly provides the liquid crystal display panel with the light. The backlight assembly includes a light source part including at least one light source, a light guide plate, and a plurality of prism sheets. The light guiding plate guides light generated from the light source part toward the liquid crystal display panel and includes a light guide prism pattern. The light guide prism pattern has a triangular cross-section when viewed on a plane substantially parallel to a light-entering side surface facing the light source part and is disposed on an upper surface of the light guide plate. The prism sheets are interposed between the light guide plate and the liquid crystal display panel and each include a prism pattern. A longitudinal direction of each prism pattern is substantially perpendicular to a longitudinal direction of the light guide prism pattern.

The present invention also discloses a backlight assembly including a light source, a light guide plate, a plurality of prism sheets, and a reflective sheet. The light source generates light and the light guide plate guides the light generated by the light source. The light guide plate includes a light guide prism pattern. The light source is disposed adjacent to a light-entering side surface of the light guide plate. The light guide prism pattern has a triangular cross-section when viewed on a plane substantially parallel to the light-entering side surface and is disposed either on a lower surface opposite a light-exiting surface or on the light-exiting surface. The prism sheets are disposed on the light exiting surface and each include a prism pattern. A longitudinal direction of each prism pattern crosses a longitudinal direction of the light guide prism pattern. The reflective sheet is disposed under the light guide plate.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 is an exploded perspective view showing a backlight assembly in accordance with a first exemplary embodiment of the present invention.

FIG. 2A, FIG. 2B, and FIG. 2C are distribution diagrams showing light exiting angles obtained through a light simulation of the backlight assembly in FIG. 1.

FIG. 3 is an exploded perspective view showing a liquid crystal display apparatus in accordance with a second exemplary embodiment of the present invention.

FIG. 4 is a cross-sectional view showing a liquid crystal display apparatus in accordance with a third exemplary embodiment of the present invention.

FIG. 5 is a cross-sectional view showing a liquid crystal display apparatus in accordance with a fourth exemplary embodiment of the present invention.

FIG. 6 is a cross-sectional view showing a liquid crystal display apparatus in accordance with a fifth exemplary embodiment of the present invention.

FIG. 7 is an exploded perspective view showing a backlight assembly in accordance with a sixth exemplary embodiment of the present invention.

FIG. 8A, FIG. 8B, and FIG. 8C are distribution diagrams showing light exiting angles obtained through a light simulation of the backlight assembly in FIG. 7.

### DETAILED DESCRIPTION OF THE ILLUSTRATED EMBODIMENTS

The invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. In the drawings, the size and relative sizes of layers and regions may be exaggerated for clarity.

It will be understood that when an element or layer is referred to as being "on," "connected to," or "coupled to" another element or layer, it can be directly on, directly connected to, or directly coupled to the other element or layer, or intervening elements or layers may be present. In contrast, when an element is referred to as being "directly on," "directly connected to," or "directly coupled to" another element or layer, there are no intervening elements or layers present. Like numbers refer to like elements throughout. As used herein, the term "and/or" includes any and all combinations of one or more of the associated listed items.

It will be understood that, although the terms first, second, third etc. may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section discussed below could be termed a second element, component, region, layer or section without departing from the teachings of the present invention.

Spatially relative terms, such as "beneath," "below," "lower," "above," "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, the exemplary term "below" can encompass both an orientation of above and below. The device may be otherwise oriented (rotated 90 degrees or at other orientations) and the spatially relative descriptors used herein interpreted accordingly.

The terminology used herein is for the purpose of describing particular embodiments only and is not intended to be limiting of the invention. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Embodiments of the invention are described herein with reference to cross-section illustrations that are schematic illustrations of idealized embodiments (and intermediate structures) of the invention. As such, variations from the shapes of the illustrations as a result, for example, of manufacturing techniques and/or tolerances, are to be expected. Thus, embodiments of the invention should not be construed as limited to the particular shapes of regions illustrated herein but are to include deviations in shapes that result, for example, from manufacturing.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, exemplary embodiments of the present invention will be explained in detail with reference to the accompanying drawings.

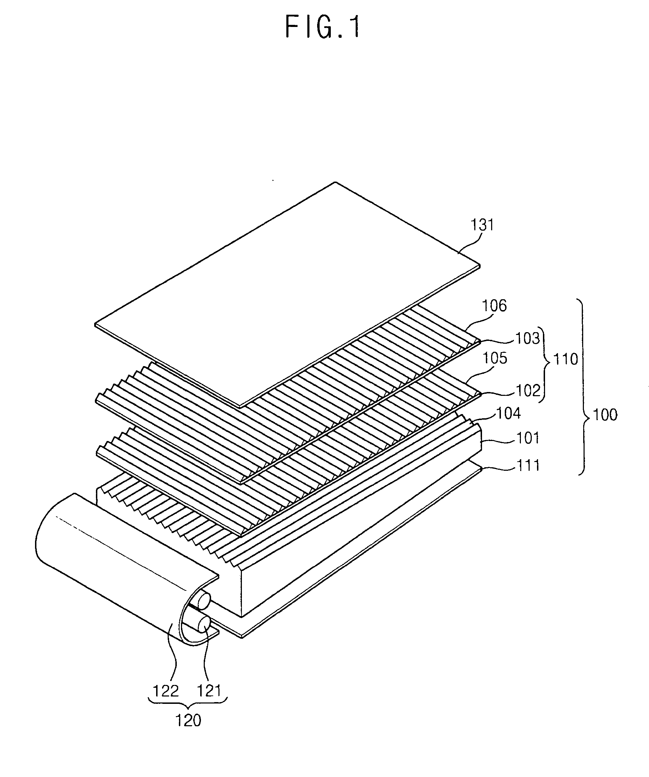

FIG. 1 is an exploded perspective view showing a backlight assembly in accordance with a first exemplary embodiment of the present invention.

Referring to FIG. 1, a backlight assembly in accordance with the first exemplary embodiment of the present invention includes a light source part 120, a light guide plate 101, a first prism sheet 102, a second prism sheet 103, and a reflection sheet 111.

In FIG. 1, the light source part 120 includes a lamp 121 and a lamp reflector 122. Light emitted from the lamp 121 toward the light guide plate 101 is directly incident into the light guide plate 101, and light emitted from the lamp 121 in a direction opposite the light guide plate 101 is reflected by the lamp reflector 122 to be incident into the light guide plate 101.

The light guide plate 101 guides light generated from the light source part 120 toward an upper surface of the backlight assembly 100. The light guide plate 101 has a trapezoidal shape. The cross-sectional width of the trapezoid shape decreases as the distance from the surface facing the light source increases. The light guide plate 101 includes a transparent material, and a light guide prism pattern 104 is disposed on the light guide plate 101. The light guide prism pattern 104 includes a plurality of prisms aligned substantially parallel to each other.

The light guide prism pattern 104 on the light guide plate 101 includes crests and troughs, and a cross-section of the light guide prism pattern 104 has a triangular shape. The light guide prism pattern 104 is disposed in a longitudinal direction substantially perpendicular to the surface facing the light source part 120.

In the light guide prism pattern 104 formed on the light guide plate 101, the internal angle of the light guide prism pattern 104 is defined as an angle formed by opposite inclined side surfaces of the light guide prism pattern 104. For example, the internal angle of the light guide prism pattern 104 formed on the light guide plate 101 may be about 90 degrees to about 150 degrees. The pitch of the light guide prism pattern 104 of the light guide plate 101 may be about 25 µm to about 150 µm.

The reflection sheet 111 is disposed under the light guide plate 101 and reflects the light emitted from the light guide plate 101 to change a light path back toward the light guide plate.

A first prism sheet 102 is disposed on the light guide plate 101 and guides the light emitted from the light guide plate 101 in a front direction that is substantially perpendicular to an upper surface of the backlight assembly 100. The first prism sheet 102 includes a base film and a first prism pattern 105 formed on the base film. A longitudinal direction of the first prism pattern 105 of the first prism sheet 102 may be substantially perpendicular to a longitudinal direction of the light guide prism pattern 104 of the light guide plate 101,or may be tilted at about 60 to about 120 degrees with respect to the longitudinal direction of the light guide prism pattern 104 of the light guide plate 101. When the first prism pattern 105 of the first prism sheet 102 is tilted, the angle between the longitudinal direction of the first prism pattern 105 of the first prism sheet 102 and the longitudinal direction of the light guide prism pattern 104 of the light guide plate 101 may preferably be about 70 degrees to about 110 degrees.

The internal angle of the first prism pattern 105 of the first prism sheet 102 may be about 80 degrees to about 110 degrees, and the pitch of the first prism pattern 105 of the first prism sheet 102 may be about 25 µm to about 150 µm.

The second prism sheet 103 is disposed on the first prism sheet 102 and guides the light emitted from the first prism sheet 102 in the front direction. The second prism sheet 103 may have substantially the same structure as the first prism sheet 102 and may include a base film and a second prism pattern 106.

A longitudinal direction of the second prism pattern 106 of the second prism sheet 103 may be substantially perpendicular to the longitudinal direction of the light guide prism pattern 104 of the light guide plate 101 or may be tilted at an angle of about 60 degrees to about 120 degrees with respect to the longitudinal direction of the light guide prism pattern 104 of the light guide plate 101.

When the longitudinal directions of the two prism patterns are tilted, the angle between the longitudinal direction of the first prism pattern 105 of the second prism sheet 102 and the longitudinal direction of the light guide prism pattern 104 of the light guide plate 101 may be about 70 degrees to about 110 degrees. In addition, the internal angle of the second prism pattern 106 of the second prism sheet 103 may be about 80 degrees to about 110 degrees, and the pitch of the second prism pattern 106 may be about 25 µm to about 150 µm.

The angle between the longitudinal direction of the first prism pattern 105 of the first prism sheet 102 and the longitudinal direction of the second prism pattern 106 of the second prism sheet 103 may be about 0 degrees to about 30 degrees. When the longitudinal directions of the first and second prism sheets 102 and 103 are substantially the same, light interference may occur based on a diffusion rate of the light. At least one of the light guide plate and the first and second prism sheets may be slightly tilted in order to prevent the occurrence of light interference.

A liquid crystal display (LCD) panel is disposed on the second prism sheet 103. A protection sheet 131 may be disposed between the LCD panel and the second prism sheet 103. The protection sheet 131 protects the second prism pattern 106 formed on the second prism sheet 103.

The lamp 121 of the light source part 120 may include a single lamp or a light-emitting diode (LED) in accordance with a request of a user.

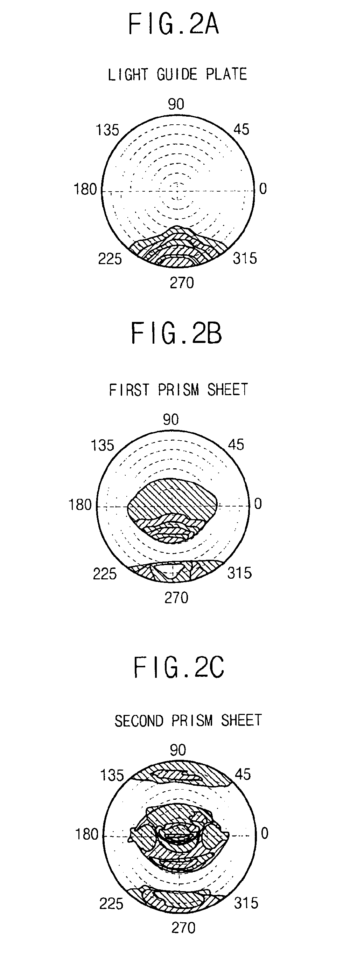

FIG. 2A, FIG. 2B, and FIG. 2C are distribution diagrams showing light exiting angles obtained through a light simulation of the backlight assembly in FIG. 1. In FIG. 2A, FIG. 2B, and FIG. 2C, the internal angle of the light guide prism pattern of the light guide plate is about 110 degrees, and the internal angle of the first prism sheet is about 85 degrees. Also, the internal angle of the second prism sheet is about 105 degrees, and the longitudinal directions of the prism patterns of the prism sheets are substantially perpendicular to the longitudinal direction of the light guide prism pattern of the light guide plate.

Referring to FIG. 2A, FIG. 2B, and FIG. 2C, light is emitted from the light source toward a light-entering side surface of the light guide plate, and the light passes through the first and second prism sheets to be guided in a front direction, so that the brightness of the light when viewed on a plane may be increased.

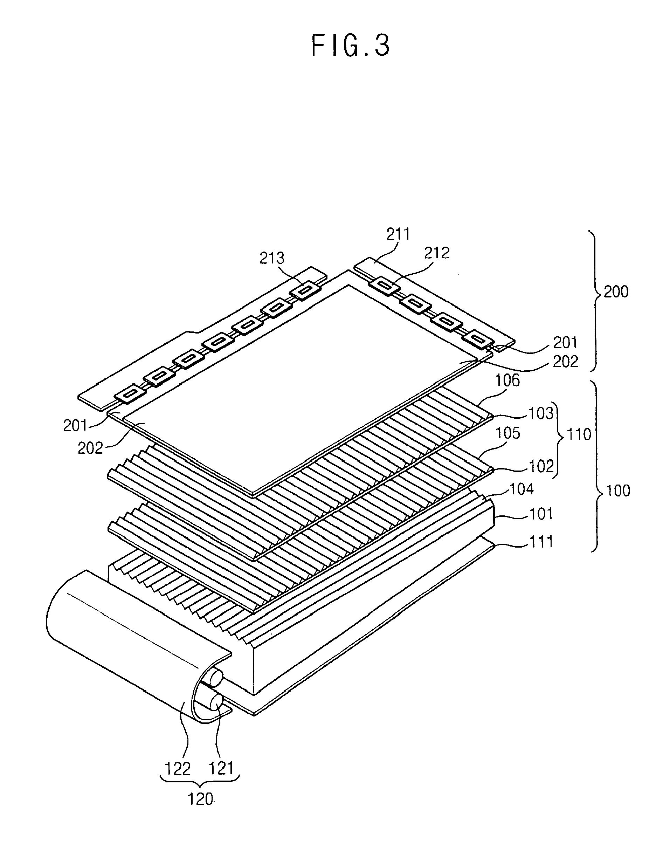

FIG. 3 is an exploded perspective view showing a liquid crystal display apparatus in accordance with a second exemplary embodiment of the present invention.

Referring to FIG. 3, an LCD apparatus according to the second exemplary embodiment of the present invention includes a light source part 120, a backlight assembly 100, and an LCD panel 200. The LCD apparatus may further include two polarizers (not shown) disposed on and under the LCD panel and a receiving container (not shown). The receiving container includes an upper receiving container (not shown) disposed on the LCD panel and a lower receiving container (not shown) disposed under the LCD panel.

The light source part 120 includes a light source 121 and a lamp reflector 122. Alternatively, the light source may include a cold cathode fluorescent lamp (CCFL) or an external electrode fluorescent lamp (EEFL). A side of the light guide plate 101 is disposed at a front surface of the light source 121. The lamp reflector 122 is disposed on a rear surface of the light source 121 and reflects light emitted in a direction different from the front direction toward the front surface.

The backlight assembly 100 includes a light guide plate 101 and a plurality of prism sheets 110. A reflection sheet 111 may be disposed under the light guide plate 101. Alternatively, a reflection material may be printed on a lower surface of the light guide plate 101 to reflect the light exiting the light guide plate 101 in a downward direction toward the front direction.

The light source part 120 is disposed on a side of the light guide plate 101, and a longitudinal direction of a light guide prism pattern 104 is substantially perpendicular to a light-entering side surface of the light guide plate facing the light source part 120. The light guide prism pattern 104 of the light guide plate 101 is formed on the light guide plate 101.

The light guide prism pattern 104 has a triangular shape in a cross-sectional view, and prisms of the light guide prism pattern 104 are arranged substantially parallel to each other. The internal angle of the light guide prism pattern 104 of the light guide plate is about 90 degrees to about 150 degrees, and the pitch of the light guide prism pattern 104 is about 25 µm to about 150 µm.

A plurality of prism sheets 110 is disposed between the light guide plate 101 and the LCD panel 200. The internal angle of a prism pattern of each prism sheet 110 is about 80 degrees to about 110 degrees, and the pitch of the prism patterns of each prism sheet 110 is about 25 µm to about 150 µm. A longitudinal direction of the prism pattern of each prism sheet 110 is different from a longitudinal direction of the light guide prism pattern 104 formed on the light guide plate 101. The longitudinal direction of the prism pattern of each prism sheet 110 may be substantially perpendicular to the longitudinal direction of the light guide prism pattern 104 formed on the light guide plate 101. Alternatively, the longitudinal direction of the prism pattern of each prism sheet 110 may be tilted at an angle of about 60 degrees to about 120 degrees. The angle defined by the longitudinal directions of the prism patterns of the prism sheets 110 may be about 0 degrees to about 30 degrees.

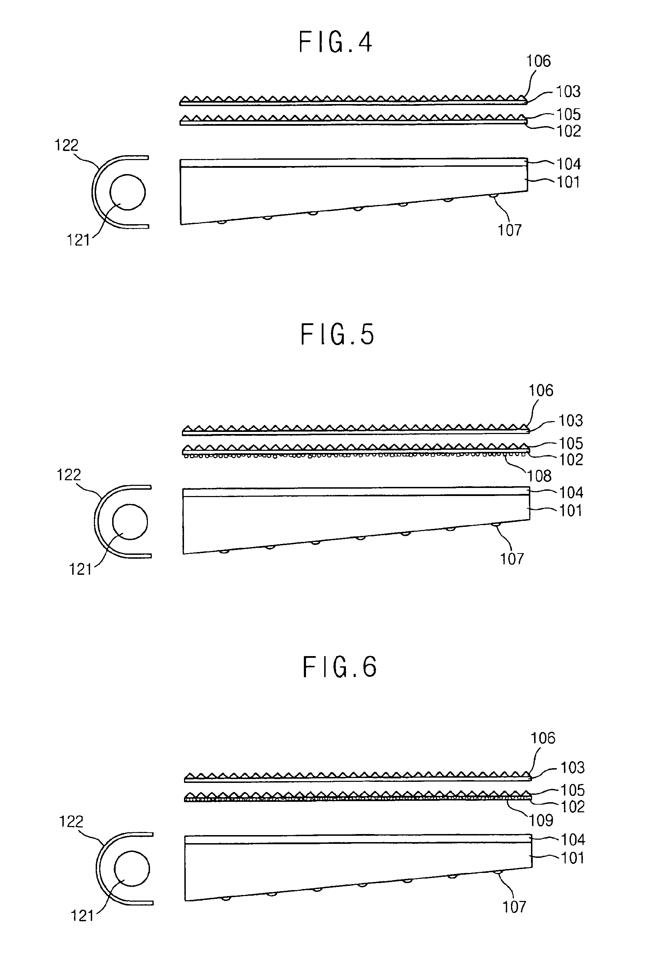

FIG. 4 is a cross-sectional view showing a liquid crystal display apparatus in accordance with a third exemplary embodiment of the present invention.

Referring to FIG. 4, a dot pattern 107 is formed on a lower surface of the light guide plate 101 so that the lower reflective sheet does not adhere to the light guide plate 101. The dot patterns 107 may be spaced apart from each other at a constant interval. Alternatively, the dot patterns 107 may be spaced apart from each other at an irregular interval. The dot patterns 107 maintain a gap between the light guide plate 101 and the lower reflective sheet.

FIG. 5 is a cross-sectional view showing a liquid crystal display apparatus in accordance with a fourth exemplary embodiment of the present invention.

Referring to FIG. 5, a diffusion material 108 is coated on a lower surface of the prism sheet 102. Light provided from the light guide plate 101 disposed under the prism sheet 102 is diffused by the diffusion material 108 and incident into the first prism pattern 105. The diffusion material 108 may include transparent bead-shaped particles, and the diffusion material 108 may be coated and fixed on the lower surface of the prism sheet 102 using a transparent binding material.

According to the fourth exemplary embodiment, a backlight assembly of the liquid crystal display apparatus includes the prism sheet 102, so that brightness uniformity of the backlight assembly and image display quality of the liquid crystal display apparatus may be improved.

FIG. 6 is a cross-sectional view showing a liquid crystal display apparatus in accordance with a fifth exemplary embodiment of the present invention.

Referring to FIG. 6, a diffuser 109 is regularly dispersed inside of a base film of the prism sheet 102. The prism sheet 102 includes the base film and a first prism pattern 105 formed on the base film. The diffuser 109 may include transparent bead-shaped particles. The diffuser 109 diffuses light provided from the light guide plate 101, and the diffused light is guided in a front direction by the first prism pattern 105 of the prism sheet 102. Therefore, brightness uniformity may be improved.

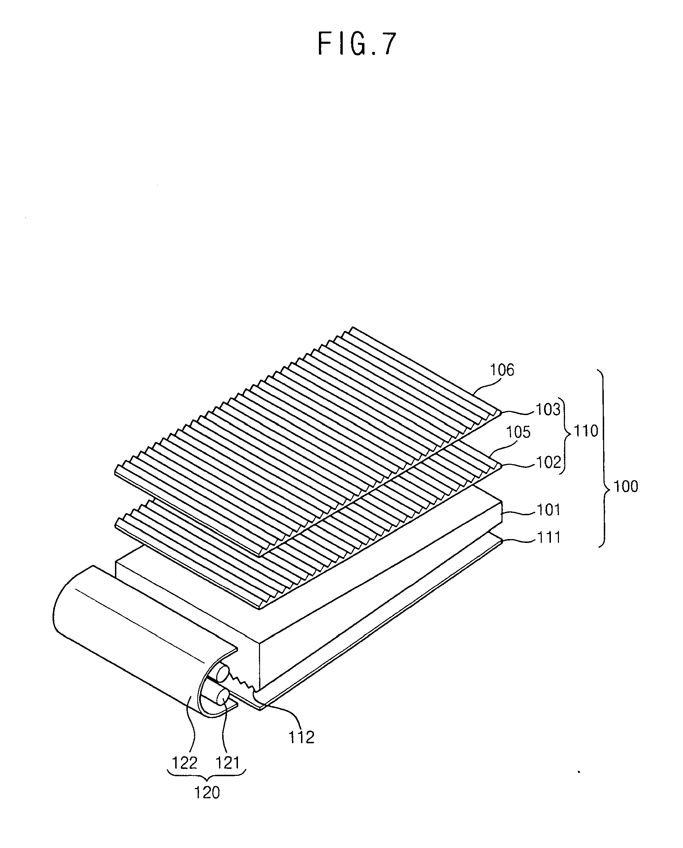

FIG. 7 is an exploded perspective view showing a backlight assembly in a sixth exemplary embodiment of the present invention.

Referring to FIG. 7, the backlight assembly includes a light source part 120, a light guide plate 101, a first prism sheet 102, a second prism sheet 103, and a reflection sheet 111. The light source part 120 includes a lamp 121 and a lamp reflector 122. The lamp 121 may include a CCFL, an EEFL, an LED, etc. The cross-sectional width of the light guide plate 101 decreases as a distance from the light-entering side surface facing the light source part 120 increases. In other words, the thickness of the light guide plate 101 decreases along a direction from the light-entering side surface to a surface opposite the light-entering side surface. The light guide plate 101 may have a trapezoidal cross-section.

The light guide plate 101 includes a transparent material, and a light guide prism pattern 112 is formed on a lower surface of the light guide plate 101. The light guide prism pattern 112 includes a crest area and a trough area, and a cross-section of the light guide prism pattern 112 has a triangular shape. A longitudinal direction of the light guide prism pattern 112 is substantially perpendicular to the light-entering side surface facing the light source part 120. The internal angle of the light guide prism pattern 112 formed on the lower surface of the light guide plate 101 may be about 90 degrees to about 150 degrees. The pitch of the light guide prism pattern 112 of the light guide plate 101 may be about 25 µm to about 150 µm. The reflection sheet 111 is disposed under the light guide plate 101 and reflects light exiting the light guide plate 101 in a downward direction toward a front direction.

The first prism sheet 102 is disposed on the light guide plate 101 and guides the light emitted from the light guide plate 101 toward the second prism sheet 103. The internal angle of the first prism pattern 105 formed on the first prism sheet 102 may be about 80 degrees to about 110 degrees.

The second prism sheet 103 is disposed on the first prism sheet 102, and guides the light emitted from the first prism sheet 102 in the front direction.

A longitudinal direction of the second prism pattern 106 of the second prism sheet 103 may be substantially parallel to a longitudinal direction of the first prism pattern 105 of the first prism sheet 102. Alternatively, the longitudinal direction of the second prism pattern 106 of the second prism sheet 103 may be tilted at about 0 degrees to about 30 degrees with respect to the longitudinal direction of the first prism pattern 105 of the first prism sheet 102.

The internal angle of the second prism pattern 106 of the second prism sheet 103 may be about 80 degrees to about 110 degrees. The pitch of the first prism pattern 105 of the first prism sheet 102 and the second prism pattern 106 of the second prism sheet 103 may be about 25 µm to about 150 µm.

The longitudinal direction of the light guide prism pattern 112 of the light guide plate 101 may cross the longitudinal direction of the prism pattern 105 and 106 of each of the first and second prism sheets 102 and 103.

The longitudinal direction of the light guide prism pattern 112 of the light guide plate 101 may form an angle of about 60 degrees to about 120 degrees with respect to the longitudinal direction of the first prism pattern 105 of the first prism sheet 102. In addition, the longitudinal direction of the light guide prism pattern 112 of the light guide plate 101 may form an angle of about 60 degrees to about 120 degrees with respect to the longitudinal direction of the second prism pattern 106 of the second prism sheet 103.

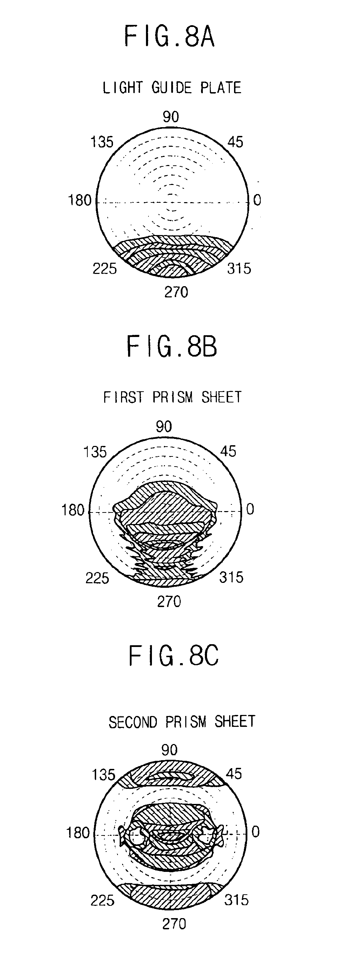

FIG. 8A, FIG. 8B, and FIG. 8C are distribution diagrams showing light exiting angles obtained through a light simulation of the backlight assembly in FIG. 7.

Referring to FIG. 7, FIG. 8A, FIG. 8B, and FIG. 8C, the internal angle of the light guide prism pattern 112 of the light guide plate 101 is about 110 degrees. The internal angle of the first prism pattern 105 of the first prism sheet 102 is about 85 degrees, and the internal angle of the second prism pattern 106 of the second prism sheet 103 is about 105 degrees. A crossing angle defined by the longitudinal direction of the prism pattern of the prism sheets 110 and the longitudinal direction of the light guide prism pattern 112 of the light guide plate 101 is about 90 degrees. Light generated from the light source part 120 enters the light-entering side surface of the light guide plate 101 passes through the first and second prism sheets 102 and 103 and condenses toward the front direction to increase brightness when viewed on a plane.

According to the present invention, the light is guided toward the liquid crystal display panel through the light guide plate and the prism sheet having the prism pattern so that light uniformity and brightness may be improved, thereby improving the display quality of the liquid crystal display apparatus.

It will be apparent to those skilled in the art that various modifications and variations can be made in the present invention without departing from the spirit or scope of the invention. Thus, it is intended that the present invention cover the modifications and variations of this invention provided they come within the scope of the appended claims and their equivalents.

## Claims

1. A backlight assembly, comprising:
a light source;
a light guide plate comprising a light exiting portion having a light guide prism pattern, the light guide prism pattern and comprising a plurality of prisms having a triangular cross-section and aligned substantially parallel to each other, the light source being disposed adjacent to a light-entering side surface of the light guide plate, and a longitudinal direction of the light guide prism pattern being substantially perpendicular to the light-entering side surface of the light guide plate;
a first prism sheet disposed on the light exiting portion of the light guide plate, the first prism sheet having a first prism pattern and a longitudinal direction of the first prism pattern being substantially perpendicular to the longitudinal direction of the light guide prism pattern; and
a second prism sheet disposed on the first prism sheet, the second prism sheet having a second prism pattern and a longitudinal direction of the second prism pattern being substantially perpendicular to the longitudinal direction of the light guide prism pattern.

2. The backlight assembly of claim 1, wherein an internal angle of a prism of the light guide prism pattern is about 90 degrees to about 150 degrees.

3. The backlight assembly of claim 1, wherein an internal angle of a prism of each of the first prism pattern and the second prism pattern is about 80 degrees to about 110 degrees.

4. The backlight assembly of claim 1, wherein a pitch of each of the first prism pattern and the second prism pattern is about 25 µm to about 150 µm.

5. The backlight assembly of claim 1, wherein the light source comprises a cold cathode fluorescent lamp (CCFL), an external electrode fluorescent lamp (EEFL), or a light emitting diode (LED).

6. The backlight assembly of claim 1, wherein the light guide plate comprises an optically transparent material.

7. The backlight assembly of claim 1, further comprising a protective film disposed on the second prism sheet.

8. A liquid crystal display apparatus comprising:
a liquid crystal display panel to display an image using light;
a backlight assembly to provide the liquid crystal display panel with the light, the backlight assembly comprising:
a light source part comprising at least one light source;
a light guide plate to guide the light generated from the light source part toward the liquid crystal display panel, the light guide plate comprising a light guide prism pattern having a triangular cross-section when viewed on a plane substantially parallel to a light-entering side surface facing the light source part and being disposed on an upper surface of the light guide plate; and
a plurality of prism sheets interposed between the light guide plate and the liquid crystal display panel, the prism sheets each comprising a prism pattern, a longitudinal direction of each prism pattern being substantially perpendicular to a longitudinal direction of the light guide prism pattern.

9. The liquid crystal display apparatus of claim 8, wherein an internal angle of a prism of each prism pattern formed on the prism sheets is about 80 degrees to about 110 degrees.

10. The liquid crystal display apparatus of claim 8, wherein an internal angle of a prism of the light guide prism pattern formed on the light guide plate is about 90 degrees to about 150 degrees.

11. The liquid crystal display apparatus of claim 8, wherein a pitch of each of the prism patterns of the light guide plate and the prism sheets is about 25 µm to about 150 µm.

12. The liquid crystal display apparatus of claim 8, wherein the light source comprises a cold cathode fluorescent lamp (CCFL) or an external electrode fluorescent lamp (EEFL).

13. The liquid crystal display apparatus of claim 8, wherein the light source part further comprises a lamp reflector to reflect a portion of the light generated from the light source toward the light guide plate.

14. The liquid crystal display apparatus of claim 8, further comprising a reflective sheet is disposed under the light guide plate.

15. The liquid crystal display apparatus of claim 8, further comprising a reflective material layer disposed on a lower surface of the light guide plate to reflect light toward a light-exiting surface of the light guide plate.

16. The liquid crystal display apparatus of claim 8, wherein a thickness of the light guide plate gradually decreases along a direction from the light-entering side surface to a surface opposite the light-entering side surface.

17. The liquid crystal display apparatus of claim 8, further comprising a dot pattern disposed on a lower surface of the light guide plate at a constant pitch.

18. The liquid crystal display apparatus of claim 8, wherein at least one prism sheet comprises the prism pattern on an upper surface of the prism sheet and a diffuser layer on a lower surface of the prism sheet.

19. The liquid crystal display apparatus of claim 8, wherein at least one prism sheet comprises the prism pattern on an upper surface of the prism sheet and diffuser particles dispersed inside the prism sheet.

20. A backlight assembly comprising:
a light source to generate light;
a light guide plate to guide the light generated by the light source, the light guide plate comprising a light guide prism pattern, the light source being disposed adjacent to a light-entering side surface of the light guide plate, the light guide prism pattern having a triangular cross-section when viewed on a plane substantially parallel to the light-entering side surface and being disposed either on a lower surface opposite a light-exiting surface or on the light-exiting surface;
a plurality of prism sheets disposed on the light exiting surface, the prism sheets each comprising a prism pattern, a longitudinal direction of each prism pattern crossing a longitudinal direction of the light guide prism pattern; and
a reflective sheet disposed under the light guide plate.

21. The backlight assembly of claim 20, wherein the light source comprises a cold cathode fluorescent lamp (CCFL), an external electrode fluorescent lamp (EEFL), or a light emitting diode (LED).

22. The backlight assembly of claim 20, further comprising a protective film disposed on the prism sheets.

23. The backlight assembly of claim 20, wherein an internal angle of a prism of the prism pattern formed on each prism sheet is about 80 degrees to about 110 degrees.

24. The backlight assembly of claim 20, wherein an internal angle of a prism of the light guide prism pattern formed on the light guide plate is about 90 degrees to about 150 degrees.

25. The backlight assembly of claim 20, wherein a pitch of each of the prism patterns formed on the light guide plate and the prism sheet is about 25 µm to about 150 µm.

26. The backlight assembly of claim 20, wherein an angle defined by a longitudinal direction of the light guide prism pattern of the light guide plate and a longitudinal direction of the prism pattern of each prism sheet is about 60 degrees to about 120 degrees.
